# EUROPÄISCHE PATENTSCHRIFT

(11) **EP 4 409 154 B1**
(45) Veröffentlichungstag und Bekanntmachung des Hinweises auf die Patenterteilung: **20.08.2025**
(21) Anmeldenummer: 22797052.2
(22) Anmeldetag: 26.09.2022
(51) Int. Cl.: F16D 55/31, F16D 65/00, F16D 65/46, F16D 65/56

(54) **RADIAL-SCHEIBENBREMSE FÜR EIN NUTZFAHRZEUG**
RADIAL DISC BRAKE FOR A UTILITY VEHICLE
FREIN À DISQUE RADIAL POUR VÉHICULE UTILITAIRE

(30) Priorität: 28.09.2021 DE 102021125139; 22.03.2022 DE 102022106643
(43) Veröffentlichungstag der Anmeldung: 07.08.2024
(73) Patentinhaber: KNORR-BREMSE Systeme für Nutzfahrzeuge GmbH, 80809 München (DE)
(72) Erfinder: SCHAUFELBERGER, Martin, 94315 Straubing (DE); STEINHUBER, Thomas, 94496 Ortenburg (DE); KRENN, Daniel, 94154 Neukirchen vorm Wald (DE); MOLNAR, Markus, 94081 Fürstenzell (DE)
(86) Internationale Anmeldenummer: PCT/EP2022/076707
(87) Internationale Veröffentlichungsnummer: WO 2023/052304

(56) Entgegenhaltungen:
- EP-A1- 2 895 760
- EP-A1- 3 097 319
- EP-A1- 3 112 718
- EP-A1- 3 751 167
- EP-B1- 2 895 760
- EP-B1- 3 097 319
- DE-A1- 102012 003 103
- DE-A1- 102015 115 856

## Beschreibung

Die Erfindung betrifft eine Radial-Scheibenbremse gemäß dem Oberbegriff des Anspruchs 1.

Die Zuspanneinrichtung einer derartigen Radial-Scheibenbremse weist üblicherweise zwei Bremsstempel auf, die parallel und abständig zueinander axial verstellbar in einer Brücke gehalten sind.

Bestandteil der Zuspanneinrichtung ist weiterhin ein Bremshebel, der pneumatisch oder elektromechanisch verschwenkbar ist und der mindestens einen Exzenterabschnitt aufweist zur Anlage an der Brücke. Andererseits stützt sich der Bremshebel am Bremssattel ab. Dabei ist der Hebelarm des Bremshebels in einem Hebeldom eingehaust, der als separates Teil an ein Sattelgehäuse des Bremssattels angeschraubt ist.

Die Bremsstempel sind als Gewindespindeln mit einem Außengewinde ausgebildet, das in Eingriff steht mit dem Innengewinde einer Gewindebohrung der Brücke.

Zum Ausgleich einer verschleißbedingten Änderung des als Lüftspiel bekannten Abstands zwischen dem zugeordneten Bremsbelag und der Bremsscheibe, ist eine Nachstelleinrichtung vorgesehen, mit der die Bremsstempel durch Verdrehen axial verstellt werden.

Um eine gleichmäßige Verdrehung der beiden Bremsstempel zu erreichen, weist die Nachstelleinrichtung eine Synchronisiereinrichtung auf, durch die eine gleichmäßige Zustellbewegung beider Bremsstempel bewirkt wird, so dass ein Ungleichverschleiß der Bremsbeläge vermieden wird.

Bei der bekannten Radial-Scheibenbremse ist die Synchronisiereinrichtung als Zugmitteltrieb, vor allem in Form eines Kettentriebs ausgeführt, wobei die beiden Trume, die an Kettenrädern der Bremsstempel umgelenkt werden, im Wesentlichen linear verlaufen. Dabei kann der Zugmitteltrieb aus einer Rollen-Gliederkette bestehen, denkbar sind aber auch andere Zugmittel, beispielsweise Zahnriemen.

Konstruktionsbedingt wird der Hebel um den Kettentrieb geführt, mit der Folge, dass der Bremssattel mehrteilig ausgebildet sein muss, wobei der den Hebelarm des Bremshebels beherbergende Hebeldom als separates Teil, üblicherweise, wie der Bremssattel insgesamt, aus Gusseisen, mit dem Sattelgehäuse verbunden wird. Beispiele von Radial-Scheibenbremsen sind aus den EP 28 95760 A1, DE 102015115856A1 bekannt.

Nachteilig hierbei sind, neben dem Einsatz einer Vielzahl von Schrauben zum Verbinden, vor allem auch Dichtungsmaßnahmen erforderlich, um das Innere des Bremssattels zu schützen.

Prozessschwankungen, wie sie beim Zusammenbau der Scheibenbremse, hier insbesondere bei der Befestigung des Hebeldomes am Sattelgehäuse, auftreten, sind nachteilig, ebenso das sich aus der Bauart ergebende relativ hohe Gewicht des Bremssattels, das den steten Forderungen nach einer Gewichtsminimierung entgegensteht.

Der Erfindung liegt die Aufgabe zugrunde, eine Radial-Scheibenbremse der gattungsgemäßen Art so weiterzuentwickeln, dass sie mit konstruktiv einfachen Mitteln schneller und damit kostengünstiger herstellbar ist und ihre Betriebssicherheit verbessert wird.

Diese Aufgabe wird durch eine Radial-Scheibenbremse mit den Merkmalen des Anspruchs 1 gelöst.

Gemäß der Erfindung ist durch die Führung der Trume außerhalb des Hebeldomes, in den der Hebelarm des Bremshebels ragt, die Möglichkeit geschaffen, den Hebeldom und das Sattelgehäuse als Gussteil einstückig auszubilden.

Damit ist eine deutliche Vereinfachung der Montagearbeiten, d.h. des Zusammenbaus der Scheibenbremse erreicht, da ein separater Hebeldom nun nicht mehr mit dem Sattelgehäuse verbunden werden muss.

Auch die Bearbeitung der den Bremssattel bildenden Teile, nämlich das Sattelgehäuse und der Hebeldom, sind vereinfacht und damit kostengünstiger, wobei hierzu insbesondere der Verzicht auf ein Einbringen von Gewindebohrungen in das Sattelgehäuse gehört, um, wie beim Stand der Technik, den Hebeldom mit dem Sattelgehäuse zu verbinden.

Eine Montagevereinfachung ergibt sich auch daraus, dass nunmehr keine Dichtung mehr sowohl bereitgestellt wie auch installiert werden muss, wie dies bei einer mehrteiligen Ausbildung des Bremssattels erforderlich ist.

Überdies wird durch die Erfindung das Gewicht der Scheibenbremse, insbesondere des Bremssattels, reduziert und kommt damit den Forderungen nach einer Gewichtsoptimierung in erheblichem Maße entgegen. Da Scheibenbremsen bei Nutzfahrzeugen, insbesondere mehrachsigen, in einer Vielzahl zum Einsatz kommen, kommt der Gewichtsreduzierung eine besondere Bedeutung zu, da damit auch der Kraftstoffverbrauch reduziert wird.

Wie sich gezeigt hat, ist die Bremsstempel-Synchronisierung und in der Folge die Bremsleistung verbessert.

Da der Zugmitteltrieb gemäß der Erfindung außerhalb des Hebeldoms angeordnet ist, ist überdies eine Einstellung des Kettenspiels problemloser möglich als dies bislang der Fall ist.

Bei einer Ausführungsvariante der Erfindung erfolgt die Führung der Trume über in eine Flanschfläche des Bremssattels eingelassene Umlenkbolzen, wobei ein Kettenspiel bei Bedarf mittels Hinzufügen oder Entfernen von Distanzhülsen an einem Umlenkbolzen oder durch Verdrehen von mindestens einem angeordneten Exzenter eingestellt werden kann

Bevorzugt sind die Trume in einer gedachten etwa U- oder trapezförmigen Bahn um den Hebeldom geführt, wobei der Exzenter an dem zum Hebeldom äußeren Trum anliegt, während das innere Trum an den Distanzhülsen anliegt.

Nach einem weiteren Gedanken der Erfindung sind zur Führung der Trume U-förmig um den Hebeldom angeordnete Führungsbahnen vorgesehen, an denen sich die Trume abstützen.

Diese Führungsbahnen sind vorzugsweise aus Blech geformt, wobei eine innere Führungsbahn fest mit dem Bremssattel verbunden ist, während die äußere Führungsbahn verstellbar am Bremssattel befestigt ist und zwar derart, dass ein Kettenspiel durch ein Verschieben der Führungsbahn in vertikaler Richtung einstellbar ist.

Dabei werden die Führungsbahnen durch eine Schraubverbindung am Bremssattel fixiert. Alternativ oder ergänzend können die Führungsbahnen auch durch einen Formschluss am Bremssattel gehalten sein.

Im Gegensatz zur vorgenannten Variante wird die Führung der Trume bei einer anderen Ausführung der Erfindung durch ein am Bremssattel befestigtes Trägerblech erreicht, das einen Stützkragen aufweist, an dem sich das innere Trum abstützt, d.h., an dem das innere Trum geführt wird.

Das äußere Trum hingegen wird über zwei sich gegenüberliegende Führungshebel geführt, von denen zumindest einer im Sinne eines Spannhebels verschwenkbar ist, um ein Kettenspiel zu beeinflussen. Hierzu ist der Führungshebel einseitig an einem Befestigungsbolzen gelagert und andererseits entlang eines Langloches verschwenkbar, das von einer Schraube durchtreten ist, mit der der Führungshebel in der gewünschten Position festsetzbar ist.

Zum Schutz des Zugmitteltriebs ist eine Abdeckplatte vorgesehen, die den Zugmitteltrieb überdeckt und die mit der Flanschfläche des Bremssattels durch Vern verbunden ist. Zum Nachstellen des Zugmitteltriebs bzw. der Trume, ist lediglich die Abdeckplatte zu lösen, so dass ein freier Zugriff auf den Zugmitteltrieb möglich ist.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Fig. 1 und 2: eine Scheibenbremse nach dem Stand der Technik jeweils in verschiedenen Montagestellungen in perspektivischer Ansicht
- Fig. 3 und 4: eine Scheibenbremse gemäß der Erfindung, gleichfalls in verschiedenen Montagestellungen schaubildlich dargestellt
- Fig. 5 und 6: jeweils eine weitere Ausführungsvariante einer Scheibenbremse nach der Erfindung in einer perspektivischen Ansicht.

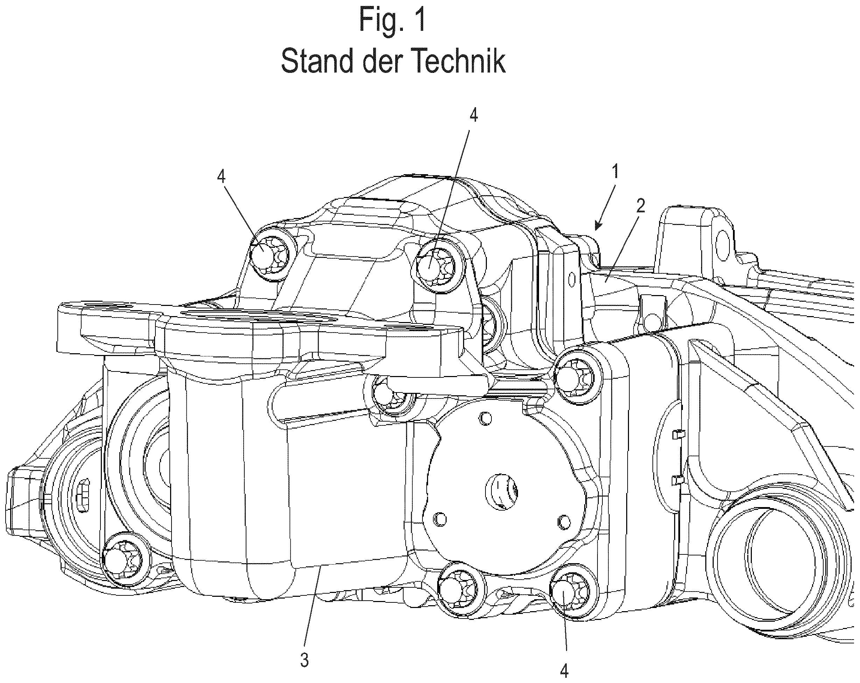

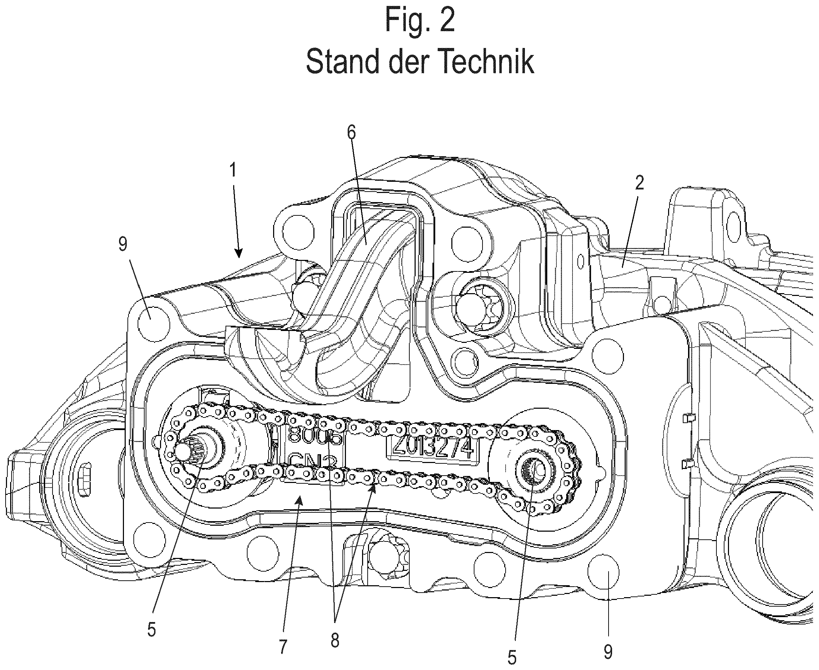

In der **Fig.** 1 ist ein Bremssattel 1 einer Scheibenbremse für ein Nutzfahrzeug nach dem Stand der Technik abgebildet, der ein Sattelgehäuse 2 sowie einen daran mittels n 4 befestigten Hebeldom 3 aufweist. Während die Fig. 1 den Bremssattel 1 in komplettierter Ausbildung wiedergibt, ist in der Fig. 2 das Sattelgehäuse 2 ohne den angebrachten Hebeldom 3 zu erkennen.

Darin ist zu sehen, dass ein Zugmitteltrieb 7, der im Beispiel aus einer Rollen-Glieder-Kette besteht mit zwei linear geführten Trumen 8, die parallel zueinander verlaufen und in Kettenräder 5 einer Nachstelleinrichtung eingreifen. Die Kettenräder 5 sind mit nicht gezeigten Bremsstempeln verbunden, mittels der ein ebenfalls nicht gezeigter Bremsbelag gegen eine Bremsscheibe pressbar ist.

Der Zugmitteltrieb 7 ist hierbei außenseitig am Sattelgehäuse 2 angeordnet und unterhalb des Hebelarmes 6 eines Bremshebels positioniert. Bei komplettierter Scheibenbremse, wie sie die Figur 1 wiedergibt, überdeckt der Hebeldom 3 den Zugmitteltrieb 7, wobei der Hebelarm 6 in den Hebeldom 3 ragt.

Weiter sind in der Figur 2 Gewindebohrungen 9 zu erkennen, die in das Sattelgehäuse 2 eingebracht sind und in die die n 4 zur Befestigung des Hebeldoms 3 am Sattelgehäuse 2 eingedreht sind.

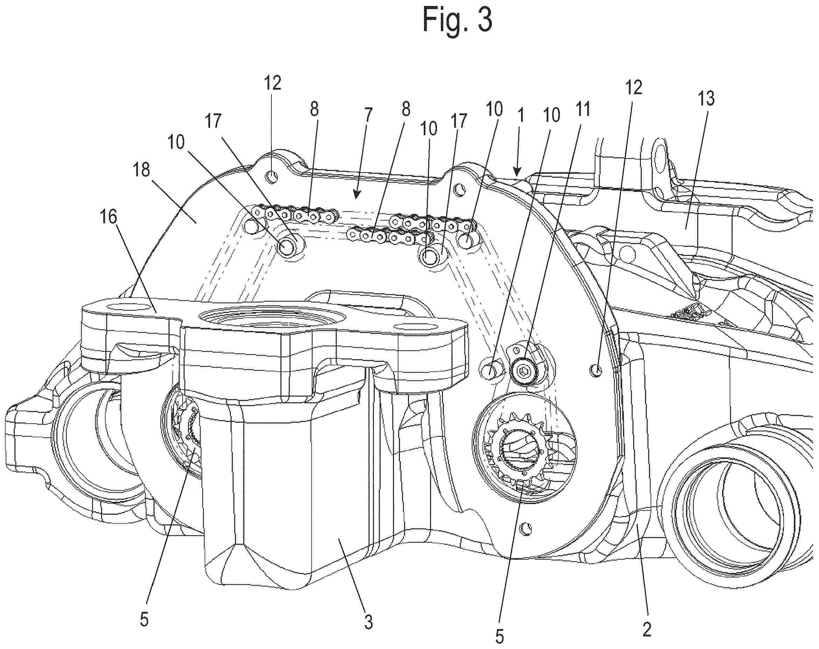

In der **Figur 3** ist eine Scheibenbremse gemäß der Erfindung dargestellt, bei der der Zugmitteltrieb 7 außerhalb des einstückig mit dem Sattelgehäuse 2 ausgebildete Hebeldoms 3 geführt ist, wobei der im Wesentlichen parallele Verlauf der beiden Trume 8 etwa U- bzw. trapezförmig ist.

Zur Führung der Trume 8 sind an einer Flanschfläche 18 des Sattelgehäuses 2 Umlenkbolzen 10 angeordnet, wobei ein horizontaler Verlauf der Trume 8 auf der einer Auflagefläche 16 des Hebeldoms 3 für einen Pneumatikzylinder zugeordneten oberen horizontalen Ebene verläuft. Die Auflagefläche 16 ist im Übrigen auf der gleichen Seite des Bremssattels wie eine Montageöffnung 13 des Sattelgehäuses 2.

Wie weiter in der Figur 3 zu erkennen ist, ist ein Teil der Umlenkbolzen 10 mit Distanzhülsen 17 versehen, mittels derer bei Bedarf ein Kettenspiel einstellbar ist, wobei diese Distanzhülsen 17 an den Umlenkbolzen 10 angeordnet sind, an denen das dem Hebeldom 3 zugewandte untere Trum 8 anliegt.

Ergänzend oder alternativ ist das obere Trum 8 an einem verschwenkbaren Exzenter 11 geführt, über den, je nach Verstellung, gleichfalls ein Kettenspiel eingestellt werden kann, wobei der Exzenter 11 auch der Umlenkung des anliegenden Trums 8 dienen kann. Statt des Exzenters 11 kann auch eine Umlenkbolzen 10 mit aufgesteckter Distanzhülse 17 vorgesehen sein.

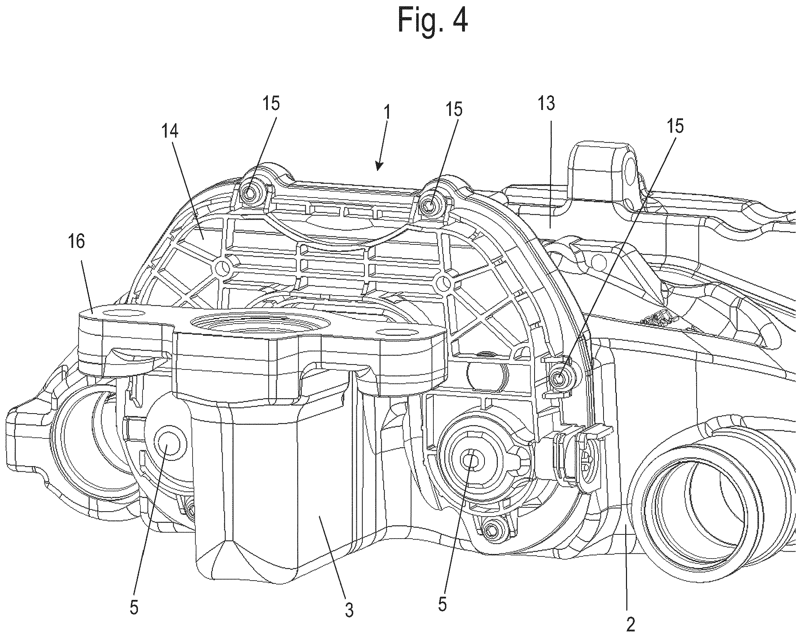

In der **Figur 4** ist die Scheibenbremse insoweit komplettiert dargestellt, als der Zugmitteltrieb 7 durch eine Abdeckplatte 14 überdeckt ist, wobei diese Abdeckplatte 14 mittels n 15, die in Gewindebohrungen 12 (Figur 3) der Flanschfläche 18 eingedreht sind. Bevorzugt entspricht die Kontur der Abdeckplatte 14 der der Flanschfläche 18.

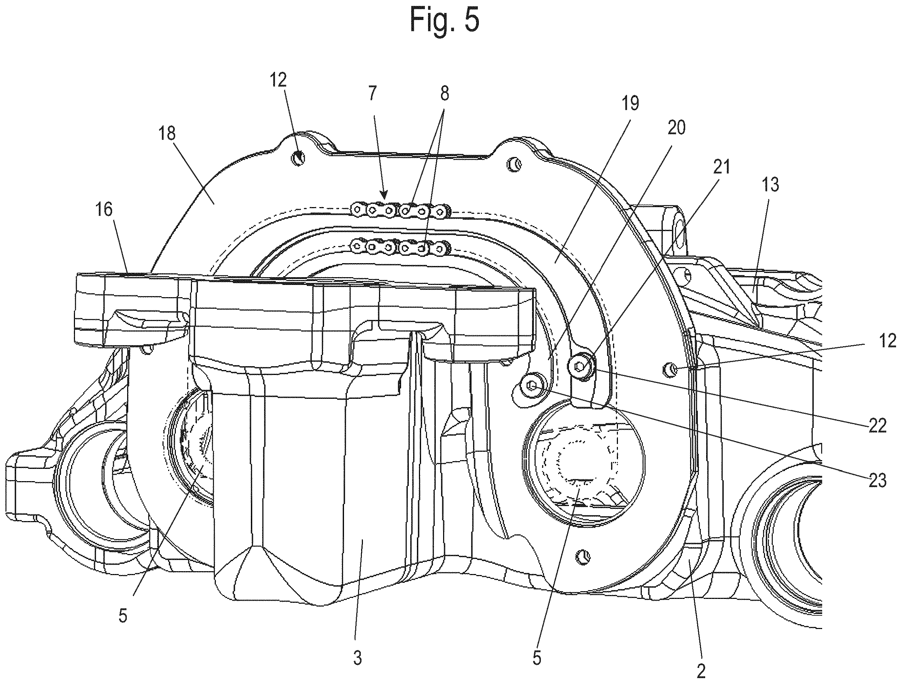

Eine weitere Ausführungsvariante der erfindungsgemäßen Scheibenbremse ist in der **Figur 5** abgebildet. Zur Lenkung der Trume 8 des Zugmitteltriebs 7 sind hier als separate Teile eine äußere Führungsbahn 19 und eine innere Führungsbahn 20 vorgesehen, die bügelförmig ausgebildet sind und an denen jeweils ein Trum 8 anliegt und zwar auf der der Auflagefläche 16 abgewandten Seite der jeweiligen Führungsbahn 19, 20.

Die dem Hebeldom 3 näherliegende innere Führungsbahn 20 ist durch Schrauben fest mit dem Bremssattel 1 verbunden, indem Schrauben 23 in die Flanschfläche 18 eingedreht sind.

Die äußere Führungsbahn 19 ist gleichfalls an der Flanschfläche 18 angeschlossen, jedoch derart, dass eine gewisse Verschwenkung im Bedarfsfall zur Nachstellung der Kettenspannung möglich ist. Hierzu ist eine Befestigungsschraube 21 in einem Langloch 22 der äußeren Führungsbahn 19 geführt, so dass die Führungsbahn 19 in vertikaler Richtung bewegbar ist. Nach entsprechender Einstellung kann die äußere Führungsbahn 19 durch Anziehen der Befestigungsschraube 21 fixiert werden.

Die Führungsbahnen 19, 20 können als Blechformteile ausgebildet sein, wobei diese im bügelartigen, d.h. U-förmigen Verlauf außenseitig eine Auflagefläche für die Trume 8 bilden.

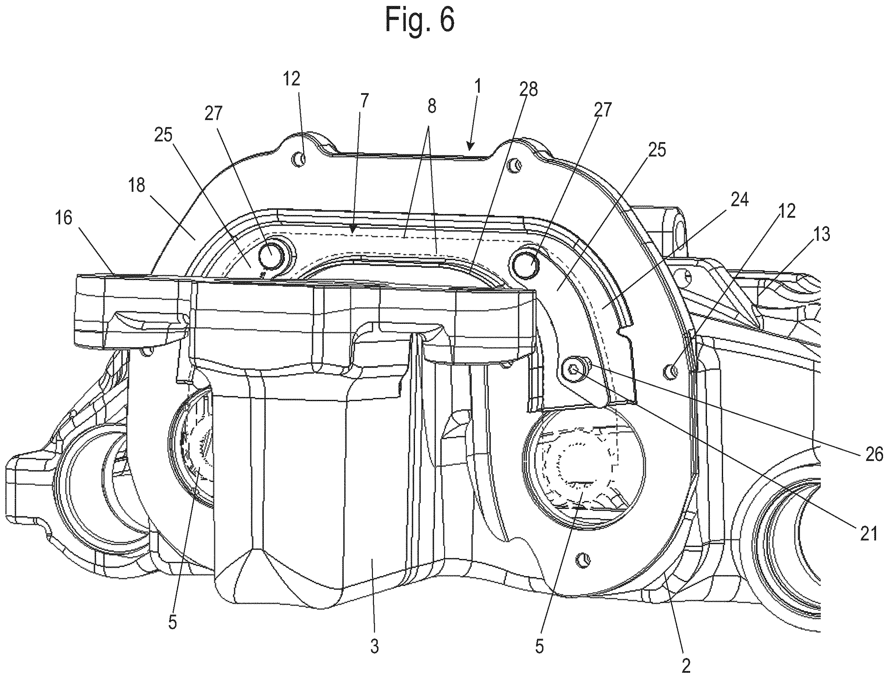

Die **Figur 6** zeigt eine weitere Ausführung der Erfindung, bei der zur Führung des Zugmitteltriebs 7 ein Trägerblech 24 mit dem Bremssattel 1 verbunden ist, wozu Befestigungsbolzen 27 und Befestigungsschrauben 21 vorgesehen sind.

Das, bezogen auf den Hebeldom 3 innere Trum 8 ist auf einem angeformten Stützkragen 28 geführt, der U-förmig verläuft. Das äußere Trum 8 hingegen liegt an Führungshebeln 25 an, von denen zumindest einer um den Befestigungsbolzen 27 verschwenkbar ist, mit dem der Führungshebel 25 und damit das Trägerblech 24 am Bremssattel 1 befestigt ist.

Durch Verschwenken des Führungshebels 25 kann das äußere Trum 8 bei Bedarf gespannt werden, wozu die Befestigungsschraube 21 in einem im Führungshebel 25 vorgesehenen Langloch 26 geführt ist. Ebenso wie bei dem in der Figur 5 gezeigten Beispiel ist durch Anziehen der Befestigungsschraube 21 nach einem Spannen des äußeren Trums 8 der Führungshebel 25 fixiert.

Die Formgebung des Trägerblechs 24 erfolgt ebenfalls durch Umformen zu einer bügelartigen U-förmigen Ausbildung.

### BEZUGSZEICHENLISTE

- 1: Bremssattel
- 2: Sattelgehäuse
- 3: Hebeldom
- 4: Schraube
- 5: Kettenrad
- 6: Hebelarm
- 7: Zugmitteltrieb
- 8: Trum
- 9: Gewindebohrung
- 10: Umlenkbolzen
- 11: Exzenter
- 12: Gewindebohrung
- 13: Montageöffnung
- 14: Abdeckplatte
- 15: Schraube
- 16: Auflagefläche
- 17: Distanzhülse
- 18: Flanschfläche
- 19: Führungsbahn
- 20: Führungsbahn
- 21: Befestigungsschraube
- 22: Langloch
- 23: Schraube
- 24: Trägerblech
- 25: Führungshebel
- 26: Langloch
- 27: Befestigungsbolzen
- 28: Stützkragen

## Patentansprüche

1. Radial-Scheibenbremse für ein Nutzfahrzeug mit
- einer in einem Aufnahmeraum eines ein Sattelgehäuse (2) und einen daran angeordneten Hebeldom (3) aufweisenden Bremssattels (1) positionierten, Zuspanneinrichtung, aufweisend
- einen verschwenkbaren Bremshebel, der mit mindestens einem Exzenterabschnitt und einem sich daran anschließenden, sich etwa parallel zur Drehachse der Bremsscheibe erstreckenden Hebelarm (6) versehen ist, der in den Hebeldom (3) ragt,
- zwei in einer Brücke axial verstellbar gelagerten, bei einer Bremsung an einem Bremsbelag anliegenden Bremsstempeln,
- eine Nachstelleinrichtung zum Ausgleich einer verschleißbedingten Änderung eines Lüftspiels,
- eine funktional mit den Bremsstempeln in Verbindung stehende, einen Zugmitteltrieb (7) aufweisende Synchronisiereinrichtung,
**dadurch gekennzeichnet, dass**
der Zugmitteltrieb (7) außerhalb des Hebeldoms (3) angeordnet ist, wobei die Trume (8) des Zugmitteltriebs (7) um einen Teilbereich des Hebeldoms (3) geführt sind.

2. Scheibenbremse nach Anspruch 1,
**dadurch gekennzeichnet, dass**
die Trume (8) an Umlenkbolzen (10) anliegen.

3. Scheibenbremse nach Anspruch 1 oder 2,
**dadurch gekennzeichnet, dass**
die Trume (8) entlang einer gedachten U- oder trapezförmigen Bahn verlaufen.

4. Scheibenbremse nach einem der vorhergehenden Ansprüche,
**dadurch gekennzeichnet, dass**
zur Einstellung eines Kettenspiels zumindest ein Teil der Umlenkbolzen (10) mit Distanzhülsen (17) versehen sind.

5. Scheibenbremse nach einem der vorhergehenden Ansprüche,
**dadurch gekennzeichnet, dass**
die Distanzhülse (17) an dem dem Hebeldom (3) zugewandten Trum (8) angeordnet ist.

6. Scheibenbremse nach einem der vorhergehenden Ansprüche,
**dadurch gekennzeichnet, dass**
zur Einstellung eines Kettenspiels mindestens ein verschwenkbarer Exzenter (11) vorgesehen ist.

7. Scheibenbremse nach einem der vorhergehenden Ansprüche,
**dadurch gekennzeichnet, dass**
der Exzenter (11) an einem Umlenkbolzen angeordnet ist.

8. Scheibenbremse nach einem der vorhergehenden Ansprüche,
**dadurch gekennzeichnet, dass**
der Exzenter (11) an dem dem Hebeldom (3) abgewandten Trum (8) anliegt.

9. Scheibenbremse nach einem der vorhergehenden Ansprüche,
**dadurch gekennzeichnet, dass**
die Umlenkbolzen (10) an einer Flanschfläche (18) des Sattelgehäuses (2) befestigt sind.

10. Scheibenbremse nach einem der vorhergehenden Ansprüche,
**dadurch gekennzeichnet, dass**
der Zugmitteltrieb (7) von einer Abdeckplatte (14) abgedeckt ist, die mit der Flanschfläche (18) verbunden ist.

11. Scheibenbremse nach einem der vorhergehenden Ansprüche,
**dadurch gekennzeichnet, dass**
die Kontur der Abdeckplatte (14) der Kontur der Flanschfläche (18) entspricht.

12. Scheibenbremse nach einem der vorhergehenden Ansprüche,
**dadurch gekennzeichnet, dass**
die Trume (8) des Zugmitteltriebs (7) jeweils über eine Führungsbahn (19, 20) geführt sind, die bügelförmig ausgebildet und mit dem Bremssattel (1) verbunden sind.

13. Scheibenbremse nach einem der vorhergehenden Ansprüche,
**dadurch gekennzeichnet, dass**
eine äußere Führungsbahn (19) verschwenkbar an der Flanschfläche (18) befestigt ist, wobei eine Befestigungsschraube (21) in einem Langloch (22) der äußeren Führungsbahn (19) gehalten ist.

14. Scheibenbremse nach einem der vorhergehenden Ansprüche,
**dadurch gekennzeichnet, dass**
die Führungsbahnen (19, 20) außenseitig eine Anlagefläche für die Trume (8) aufweisen.

15. Scheibenbremse nach einem der vorhergehenden Ansprüche,
**dadurch gekennzeichnet, dass**
an der Flanschfläche (18) ein Trägerblech (24) befestigt ist, wobei an dem Trägerblech (24) zur Führung des äußeren Trums (8) Führungshebel (25) angeordnet sind, an denen das äußere Trum (8) anliegt.

16. Scheibenbremse nach einem der vorhergehenden Ansprüche,
**dadurch gekennzeichnet, dass**
zur Führung des inneren Trums (8) am Trägerblech (24) ein Stützkragen (28) angeordnet ist.

17. Scheibenbremse nach einem der vorhergehenden Ansprüche,
**dadurch gekennzeichnet, dass**
zumindest einer der Führungshebel (25) verschwenkbar am Trägerblech (24) befestigt ist.

18. Scheibenbremse nach einem der vorhergehenden Ansprüche,
**dadurch gekennzeichnet, dass**
der verschwenkbare Führungshebel (25) ein Langloch (26) aufweist, durch das eine Befestigungsschraube (21) geführt ist.

## Claims

1. Radial disc brake for a utility vehicle having
- a tensioning device positioned in a receiving space of a brake caliper (1) with a caliper housing (2) and a lever dome (3) arranged thereon, comprising
- a pivotable brake lever, which is provided with at least one eccentric section and an adjoining lever arm (6) which extends approximately parallel to the axis of rotation of the brake disc and projects into the lever dome (3),
- two brake plungers mounted in an axially adjustable manner in a bridge and bearing against a brake pad during braking,
- an adjustment device for compensating a change in air play caused by wear,
- a synchronizing device which is functionally connected to the brake plungers and has a traction mechanism drive (7),
**characterized in that**
the traction mechanism drive (7) is arranged outside the lever dome (3), wherein the strands (8) of the traction mechanism drive (7) are guided around a partial region of the lever dome (3).

2. Brake disc according to claim 1,
**characterized in that**
the strands (8) bear against deflection bolts (10).

3. Disc brake according to claim 1 or 2,
**characterized in that**
the strands (8) extend along an imaginary U-shaped or trapezoidal path.

4. Disc brake according to any one of the preceding claims,
**characterized in that**
at least some of the deflection bolts (10) are provided with spacer sleeves (17) for adjusting a chain play.

5. Disc brake according to any one of the preceding claims,
**characterized in that**
the spacer sleeve (17) is arranged on the strand (8) facing the lever dome (3).

6. Disc brake according to any one of the preceding claims,
**characterized in that**
at least one pivotable eccentric (11) is provided for adjusting a chain play.

7. Disc brake according to any one of the preceding claims,
**characterized in that**
the eccentric (11) is arranged on a deflection bolt.

8. Disc brake according to any one of the preceding claims,
**characterized in that**
the eccentric (11) bears against the strand (8) facing away from the lever dome (3).

9. Disc brake according to any one of the preceding claims,
**characterized in that**
the deflection bolts (10) are secured to a flange surface (18) of the caliper housing (2).

10. Disc brake according to any one of the preceding claims,
**characterized in that**
the traction mechanism drive (7) is covered by a cover plate (14), which is connected to the flange surface (18).

11. Disc brake according to any one of the preceding claims,
**characterized in that**
the contour of the cover plate (14) corresponds to the contour of the flange surface (18).

12. Disc brake according to any one of the preceding claims,
**characterized in that**
the strands (8) of the traction mechanism drive (7) are each guided over a guide track (19, 20), which is bow-shaped and are connected to the brake caliper (1).

13. Disc brake according to any one of the preceding claims,
**characterized in that**
an outer guide track (19) is secured pivotably to the flange surface (18), wherein a fastening screw (21) is held in an elongated hole (22) of the outer guide track (19).

14. Disc brake according to any one of the preceding claims,
**characterized in that**
the guide tracks (19, 20) have a contact surface on the outer side for the strands (8).

15. Disc brake according to any one of the preceding claims,
**characterized in that**
a carrier plate (24) is secured to the flange surface (18), wherein guide levers (25) are arranged on the carrier plate (24) for guiding the outer strand (8) against which the outer strand (8) bears.

16. Disc brake according to any one of the preceding claims,
**characterized in that**
a support collar (28) is arranged on the carrier plate (24) for guiding the inner strand (8).

17. Disc brake according to any one of the preceding claims,
**characterized in that**
at least one of the guide levers (25) is pivotably attached to the carrier plate (24).

18. Disc brake according to any one of the preceding claims,
**characterized in that**
the pivotable guide lever (25) has an elongated hole (26), through which a fastening screw (21) is guided.

## Revendications

1. Frein à disque radial pour un véhicule utilitaire avec
- un dispositif de serrage positionné dans un espace de réception d'un étrier de frein (1) présentant un boîtier d'étrier (2) et un dôme de levier (3) agencé sur celui-ci, présentant
- un levier de frein pivotant qui est pourvu d'au moins une section d'excentrique et d'un bras de levier (6) s'y raccordant, s'étendant à peu près parallèlement à l'axe de rotation du disque de frein, bras qui fait saillie dans le dôme de levier (3),
- deux pistons de frein logés de manière déplaçable axialement dans un pont, reposant contre une garniture de frein lors d'un freinage,
- un dispositif de réajustage pour compenser une modification due à l'usure d'un dégagement,
- un dispositif de synchronisation se trouvant en liaison fonctionnelle avec les pistons de frein, présentant une transmission de moyen de traction (7),
**caractérisé en ce que**
la transmission de moyen de traction (7) est agencée en dehors du dôme de levier (3), dans lequel les brins (8) de la transmission de moyen de traction (7) sont guidés autour d'une zone partielle du dôme de levier (3).

2. Frein à disque selon la revendication 1,
**caractérisé en ce que**
les brins (8) reposent contre des boulons de renvoi (10).

3. Frein à disque selon la revendication 1 ou 2,
**caractérisé en ce que**
les brins (8) s'étendent le long d'une bande en U ou en trapèze imaginaire.

4. Frein à disque selon l'une quelconque des revendications précédentes,
**caractérisé en ce que**
au moins une partie des boulons de renvoi (10) est pourvue de douilles d'écartement (17) pour le réglage d'un jeu de chaîne.

5. Frein à disque selon l'une quelconque des revendications précédentes,
**caractérisé en ce que**
la douille d'écartement (17) est agencée au niveau du brin (8) tourné vers le dôme de levier (3).

6. Frein à disque selon l'une quelconque des revendications précédentes,
**caractérisé en ce que**
au moins une excentrique (11) pivotante est prévue pour le réglage d'un jeu de chaîne.

7. Frein à disque selon l'une quelconque des revendications précédentes,
**caractérisé en ce que**
l'excentrique (11) est agencée au niveau d'un boulon de renvoi.

8. Frein à disque selon l'une quelconque des revendications précédentes,
**caractérisé en ce que**
l'excentrique (11) repose contre le brin (8) éloigné du dôme de levier (3).

9. Frein à disque selon l'une quelconque des revendications précédentes,
**caractérisé en ce que**
les boulons de renvoi (10) sont fixés à une surface de bride (18) du boîtier d'étrier (2).

10. Frein à disque selon l'une quelconque des revendications précédentes,
**caractérisé en ce que**
la transmission de moyen de traction (7) est recouverte d'une plaque de recouvrement (14) qui est reliée à la surface de bride (18).

11. Frein à disque selon l'une quelconque des revendications précédentes,
**caractérisé en ce que**
le contour de la plaque de recouvrement (14) correspond au contour de la surface de bride (18).

12. Frein à disque selon l'une quelconque des revendications précédentes,
**caractérisé en ce que**
les brins (8) de la transmission de moyen de traction (7) sont guidés respectivement par le biais d'une bande de guidage (19, 20) qui sont formés en arceau et reliés à l'étrier de frein (1).

13. Frein à disque selon l'une quelconque des revendications précédentes,
**caractérisé en ce que**
une bande de guidage (19) extérieure est fixée de manière pivotante à la surface de bride (18), dans lequel une vis de fixation (21) est maintenue dans un trou oblong (22) de la bande de guidage (19) extérieure.

14. Frein à disque selon l'une quelconque des revendications précédentes,
**caractérisé en ce que**
les bandes de guidage (19, 20) présentent côté extérieur une surface d'appui pour les brins (8).

15. Frein à disque selon l'une quelconque des revendications précédentes,
**caractérisé en ce que**
une tôle support (24) est fixée à la surface de bride (18), dans lequel des leviers de guidage (25) sont agencés au niveau de la tôle support (24) pour le guidage du brin (8) extérieur, leviers contre lesquels le brin (8) extérieur repose.

16. Frein à disque selon l'une quelconque des revendications précédentes,
**caractérisé en ce que**
un collet d'appui (28) est agencé pour le guidage du brin (8) intérieur au niveau de la tôle support (24).

17. Frein à disque selon l'une quelconque des revendications précédentes,
**caractérisé en ce que**
au moins un des leviers de guidage (25) est fixé de manière pivotante à la tôle support (24).

18. Frein à disque selon l'une quelconque des revendications précédentes, **caractérisé en ce que**
le levier de guidage (25) pivotant présente un trou oblong (26) à travers lequel une vis de fixation (21) est guidée.
